# EUROPEAN PATENT APPLICATION

(11) **EP 4 503 821 A1**
(43) Date of publication of application: **05.02.2025**
(21) Application number: 24160130.1
(22) Date of filing: 28.02.2024
(51) Int. Cl.: H04W 72/21, H04L 25/02, H04L 5/00

(54) **RADIO COMMUNICATION APPARATUS AND RADIO COMMUNICATION METHOD**

(30) Priority: 02.08.2023 JP 2023126478
(71) Applicant: Sharp Kabushiki Kaisha, Sakai City, Osaka 590-8522 (JP)
(72) Inventor: ONODERA, Takashi, Sakai City, Osaka 590-8522 (JP); NAMBA, Hideo, Sakai City, Osaka 590-8522 (JP)
(74) Representative: Müller Hoffmann & Partner

(57) **Abstract**

Object

Communication quality of radio links in radio communication can be satisfactorily maintained.

Solution

A station apparatus (4002) includes a timer (5002-1), and in a case that a radio frame (7003) requiring a response is received and no reception error is detected, the station apparatus (4002) transmits an Ack frame (7004) being a response frame in response to the radio frame (7003) and subsequently transmits a sounding frame (7005), and resets the timer (5002-1). In a case that the timer (5002-1) enters an expiration state (7104), the station apparatus (4002) performs carrier sense and a backoff procedure and then transmits a sounding frame (7009), and resets the timer (5002-1).

## Description

### Technical Field

The present invention relates to a radio communication apparatus and a radio communication method.

### Background Art

The Institute of Electrical and Electronics Engineers Inc. (IEEE) has been continuously working to update the IEEE 802.11 specification that is a wireless Local Area Network (LAN) standard in order to achieve a higher speed and spectral efficiency of wireless LAN communication. In a wireless LAN, radio communication can be performed using frequency bands (unlicensed bands) that can be used without permission (license) by nations or regions. For applications for individuals including household applications, Internet access from residences is wirelessly established by, for example, including a wireless LAN access point function in line termination apparatuses for connection to a Wide Area Network (WAN) line such as the Internet or connecting a wireless LAN access point apparatus to a line termination apparatus. With this, wireless LAN station apparatuses such as smartphones and personal computers can connect to the wireless LAN access point apparatuses to access the Internet.

Standardization of IEEE 802.1 1ax was completed in 2021, and wireless LAN devices that are compliant with the standards and communication apparatuses such as smartphones and personal computers equipped with the wireless LAN devices have appeared on the market as products that are compliant with Wi-Fi 6 (trade name; a name for IEEE 802.11ax compliant products certified by the Wi-Fi Alliance). In addition, activities for standardizing IEEE 802.11be as a standard to succeed IEEE 802.11ax have been in progress, and further, discussions for IEEE 802.11bn being a standard to succeed IEEE 802.11be have been in progress as well. As wireless LAN devices are rapidly widely used, studies are in progress, in standardizing IEEE 802.11 of recent years, to further improve a throughput per user in environments where wireless LAN devices are densely located.

In the activities for standardizing IEEE 802.11be, Multi-Link Operation (MLO) in which a radio communication apparatus can simultaneously use multiple frequency bands, channels, and the like. to maintain multiple link connections and perform communication is discussed (NPL 1). One example of the MLO is a simultaneous operation of three link connections of different frequency bands, which are connection of a 2.4 GHz band, connection of a 5 GHz band (a 5.2 GHz band, a 5.3 GHz band, a 5.6 GHz band, and the like), and connection of a 6 GHz band. As a matter of course, combinations of the frequency bands, the channels, and the like are not limited to this, and various combinations are possible. In terms of the frequency bands, in future, high frequency bands such as millimeter waves (a 28 GHz band, a 45 GHz band, a 60 GHz band, and the like) and (sub-)terahertz waves (a band of 100 GHz to 300 GHz) may also be used as one link to constitute the multi-link. The MLO allows a radio communication apparatus to simultaneously maintain multiple link connections with different configurations related to radio resources and communication used by the radio communication apparatus. The radio communication apparatus can not only transmit and/or receive frames by simultaneously using multiple links, but can also switch link connections for transmitting and/or receiving the frames, that is, change the frequency bands, without performing a reconnection operation. Note that an individual link constituting the multi-link is herein also referred to as a physical layer link. The radio communication apparatus supporting the MLO is referred to as a Multi-Link Device (MLD).

### Citation List

### Non Patent Literature

NPL 1: IEEE 802.11-19/0773-08-00be, Nov. 2019

### Summary of Invention

### Technical Problem

In a wireless LAN, in order to implement a higher speed and spectral efficiency, maintaining communication quality of radio links is a problem.

### Solution to Problem

A radio communication apparatus and a radio communication method according to the present invention for solving the aforementioned problem are as follows.
(1) That is, a radio communication apparatus according to an aspect of the present invention is a radio communication apparatus for performing communication with a radio communication apparatus of a communication partner using a radio link. The radio communication apparatus includes a radio communication unit configured to perform transmission and reception of a radio frame on a first radio link, and a radio controller including a first timer. In a case that the radio communication unit receives the radio frame including first control information indicating that the first timer is to be configured, the radio controller sets the first timer to an active state. In a case that a first radio frame requiring a response is received on the first radio link, the radio communication unit transmits a first response frame in response to the first radio frame and subsequently transmits a first sounding frame without carrier sense, and the radio controller resets the first timer. In a case that the first timer expires, the radio communication unit performs carrier sense and then transmits the first sounding frame on the first radio link, and the radio controller resets the first timer.
(2) In the radio communication apparatus according to an aspect of the present invention, the radio communication apparatus may be a radio communication apparatus configured to perform communication with the radio communication apparatus of the communication partner by simultaneously using multiple radio links including the first radio link and a second radio link of a frequency band different from a frequency band of the first radio link. The radio communication unit may further perform transmission and reception of a radio frame on the second radio link. The radio controller may further include a second timer. In a case that the radio communication unit receives a radio frame including second control information indicating that the second timer is to be configured, the radio controller may set the second timer to the active state. In a case that a second radio frame requiring a response is received on the second radio link, the radio communication unit may transmit a second response frame in response to the second radio frame and subsequently transmit a second sounding frame without carrier sense, and the radio controller may reset the second timer. In a case that the second timer expires, the radio communication unit may perform carrier sense and then transmit the second sounding frame on the second radio link, and the radio controller may reset the second timer.
(3) In the radio communication apparatus according to an aspect of the present invention, in a case that the first timer has reached a prescribed value in the case that the first radio frame is received, the radio communication unit may transmit, subsequently to transmission of the first response frame, the first sounding frame without carrier sense.
(4) In the radio communication apparatus according to an aspect of the present invention, in a case that the first response frame is a block response frame, the radio communication unit may transmit, subsequently to transmission of the block response frame, the first sounding frame without carrier sense, in a case that the number of acknowledgment responses included in the block response frame is less than a prescribed number.
(5) In the radio communication apparatus according to an aspect of the present invention, in a case that the radio communication unit receives the radio frame including third control information, the radio controller may configure an expiration criterion for the first timer, and reset the first timer.
(6) In the radio communication apparatus according to an aspect of the present invention, the third control information may be information for configuring a Quality of Service (QoS).
(7) In the radio communication apparatus according to an aspect of the present invention, in a case that the radio communication unit receives the radio frame including fourth control information, the radio controller may set the first timer to an inactive state.
(8) In the radio communication apparatus according to an aspect of the present invention, the fourth control information may be information for releasing configuration of the QoS.
(9) In the radio communication apparatus according to an aspect of the present invention, the radio controller may further include a third timer, and set the first timer and the third timer to the active state, in the case that the radio communication unit receives the radio frame including the first control information. In a case that the third timer has expired in the case that the first radio frame is received, the radio communication unit may transmit, subsequently to transmission of the first response frame, the first sounding frame without carrier sense and the radio controller may reset the first timer and the third timer. In the case that the first timer expires, the radio communication unit may perform carrier sense and then transmit the first sounding frame on the first radio link, and the radio controller may reset the first timer and the third timer.
(10) In the radio communication apparatus according to an aspect of the present invention, in a case that the first timer has reached a prescribed value in the case that the first radio frame is received, the radio communication unit may transmit, subsequently to transmission of the first response frame, the first sounding frame without carrier sense. In a case that the second timer has reached a prescribed value in the case that the second radio frame is received, the radio communication unit may transmit the second response frame and subsequently transmit the second sounding frame without carrier sense.
(11) In the radio communication apparatus according to an aspect of the present invention, in a case that the first response frame or the second response frame is a block response frame, the radio communication unit may transmit the block response frame and subsequently transmit the first sounding frame or the second sounding frame without carrier sense, in a case that the number of acknowledgment responses included in the block response frame is less than a prescribed number.
(12) In the radio communication apparatus according to an aspect of the present invention, the radio controller may configure an expiration criterion for the first timer and reset the first timer in a case that the radio communication unit receives a radio frame including third control information, and may configure an expiration criterion for the second timer and reset the second timer in a case that the radio communication unit receives a radio frame including fifth control information.
(13) In the radio communication apparatus according to an aspect of the present invention, the radio controller may set the first timer to an inactive state in a case that the radio communication unit receives a radio frame including fourth control information, and may set the second timer to the inactive state in a case that the radio communication unit receives a radio frame including sixth control information.
(14) A radio communication apparatus according to an aspect of the present invention is a radio communication apparatus for performing communication with a radio communication apparatus of a communication partner using a radio link. The radio communication apparatus includes a radio communication unit configured to perform transmission and reception of a radio frame on a first radio link, and a radio controller configured to generate control information. The radio controller generates first control information including a configuration and reset criterion related to the first timer included in the radio communication apparatus of the communication partner and a transmission criterion for a sounding frame from the radio communication apparatus of the communication partner. The first radio communication unit transmits a radio frame including the first control information.
(15) A communication method according to an aspect of the present invention is a communication method in a radio communication apparatus for performing communication with another radio communication apparatus using a radio link. The communication method includes the steps of receiving a radio frame including first control information indicating that a first timer is to be configured, in a case that the radio frame including the first control information is received, setting the first timer to an active state, receiving a first radio frame requiring a response on a first radio link, transmitting a first response frame in response to the first radio frame, transmitting, subsequently to transmission of the first response frame, a first sounding frame without carrier sense and resetting the first timer, and in a case that the first timer expires, performing carrier sense and then transmitting the first sounding frame on the first radio link, and resetting the first timer.

### Advantageous Effects of Invention

According to the radio communication apparatus and the radio communication method of the present invention, communication quality of radio links in radio communication can be satisfactorily maintained.

### Brief Description of Drawings

FIG. 1 is a diagram illustrating an example of a MAC layer frame structure according to a wireless LAN system.
FIG. 2 is a diagram illustrating an example of a PPDU configuration according to the wireless LAN system.
FIG. 3 is a diagram illustrating an example of a sounding procedure according to the wireless LAN system.
FIG. 4 is a diagram illustrating a configuration example of a communication system according to an aspect of the present invention.
FIG. 5 is a block diagram illustrating a configuration example of a station apparatus according to an aspect of the present invention.
FIG. 6 is a block diagram illustrating a configuration example of an access point apparatus according to an aspect of the present invention.
FIG. 7 is a diagram illustrating an example of a sounding procedure in a radio communication system according to an aspect of the present invention.
FIG. 8 is a diagram illustrating an example of a sounding procedure in the radio communication system according to an aspect of the present invention.
FIG. 9 is a flowchart of an example of a sounding procedure in the station apparatus according to an aspect of the present invention.
FIG. 10 is a diagram illustrating a configuration example of the communication system according to an aspect of the present invention.

### Description of Embodiments

A radio communication system according to the present embodiment includes an access point apparatus (also referred to as an AP or a base station apparatus) and multiple station apparatuses (also referred to as STAs or terminal apparatuses). A communication system and a network including the access point apparatus and the station apparatus will be referred to as a Basic Service Set (a BSS or a management range). In addition, the station apparatus according to the present embodiment may have functions of the access point apparatus. Similarly, the access point apparatus according to the present embodiment may have functions of the station apparatus. Therefore, in a case that a communication apparatus or a radio communication apparatus is simply mentioned below, the communication apparatus or the radio communication apparatus may indicate both the access point apparatus and the station apparatus.

The access point apparatus and the station apparatuses in the BSS are assumed to perform communication based on Carrier Sense Multiple Access with Collision Avoidance (CSMA/CA). Although the present embodiment is intended for an infrastructure mode in which an access point apparatus performs communication with multiple station apparatuses, the method of the present embodiment can also be performed in an ad hoc mode in which station apparatuses perform communication directly with each other. In the ad hoc mode, one certain station apparatus substitutes for an access point apparatus to form a BSS. The BSS in the ad hoc mode may also be referred to as an Independent Basic Service Set (IBSS). In the following description, a station apparatus that forms an IBSS in the ad hoc mode can also be considered to be an access point apparatus. The method of the present embodiment can also be implemented in Wi-Fi Direct (trade name) in which station apparatuses directly communicate with each other. In Wi-Fi Direct, one station apparatus substitutes for an access point apparatus to form a group. The station apparatus is referred to as a group owner, and can also be considered to be an access point apparatus.

In an IEEE 802.11 system, each apparatus can transmit multiple types of frames (communication frames) in a common frame format. A frame is defined in each of the Physical (PHY) layer, the Medium Access Control (MAC) layer, and the Logical Link Control (LLC) layer.

The frame of the PHY layer is referred to as a physical protocol data unit (PHY Protocol Data Unit (PPDU), or physical layer frame). The PPDU includes a physical layer header (PHY header) including information and the like for signal processing in the physical layer, a physical service data unit (PHY Service Data Unit (PSDU)) that is a data unit processed in the physical layer, and the like. The PSDU can include an Aggregated MAC Protocol Data Unit (MPDU, or MAC layer frame) (A-MPDU) in which multiple MPDUs serving as retransmission units in a radio section are aggregated.

A PHY header includes a reference signal such as a Short Training Field (STF) used for detection, synchronization, and the like of signals and a Long Training Field (LTF) used for obtaining channel information for demodulating data, and a control signal such as a Signal (SIG) including control information for demodulating data. The STFs are classified into a Legacy-STF (L-STF), a High Throughput-STF (HT-STF), a Very High Throughput-STF (VHT-STF), a High Efficiency-STF (HE-STF), an Extremely High Throughput-STF (EHT-STF), and the like in accordance with corresponding standards, and the LTFs and the SIGs are also similarly classified into an L-LTF, an HT-LTF, a VHT-LTF, an HE-LTF, an L-SIG, an HT-SIG, a VHT-SIG, an HE-SIG, and an EHT-SIG. The VHT-SIG is further classified into VHT-SIG-A1, VHT-SIG-A2, and VHT-SIG-B. Similarly, the HE-SIG is classified into HE-SIG-A1 to 4 and HE-SIG-B. In addition, on the assumption of technology update in the same standard, a Universal SIGNAL (U-SIG) field including additional control information may be included.

Furthermore, the PHY header may include information for identifying a BSS of a transmission source of the frame (hereinafter, also referred to as BSS identification information). The information for identifying a BSS may be, for example, a Service Set IDentifier (SSID) of the BSS or a MAC address of an access point apparatus of the BSS. In addition, the information for identifying a BSS may be a value unique to the BSS (e.g., a BSS Color, and the like) other than an SSID or a MAC address. The information indicating the BSS Color may be included in HE-SIG-A or U-SIG.

The PPDU is modulated in accordance with the corresponding standard. In the IEEE 802.11n standard, for example, the PPDU is modulated into an Orthogonal Frequency Division Multiplexing (OFDM) signal.

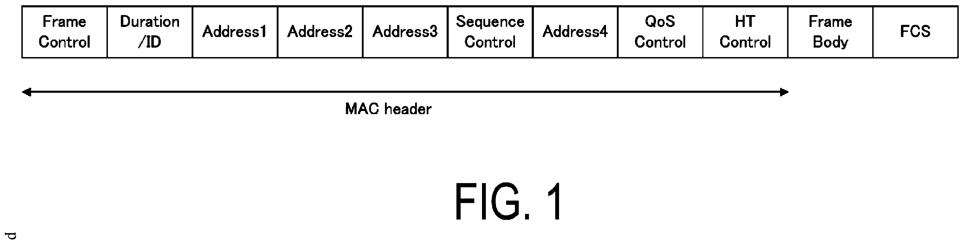

The MPDU includes a MAC header including information and the like for signal processing in the MAC layer, a MAC Service Data Unit (MSDU) or a frame body that is a data unit processed in the MAC layer, and a Frame Check Sequence (FCS) for checking whether there is an error in a frame (FIG. 1). In addition, multiple MSDUs may be aggregated as an Aggregated MSDU (A-MSDU).

The frame types in the MAC layer are roughly classified into three frame types, namely a management frame for managing a connection state and the like between apparatuses, a control frame for managing a communication state between apparatuses, and a data frame including actual transmission data. Each frame type is further classified into multiple kinds of subframe types. The control frame includes a confirmation response (Acknowledgement, Ack, or ACK) frame, a block confirmation response (Block Acknowledgement, BA, or BlockAck) frame, a transmission request (Request To Send (RTS)) frame, a transmission enabled (Clear To Send (CTS)) frame, and the like. The BlockAck can give a confirmation response (reception completion notification) with respect to multiple MPDUs. The management frame includes a Beacon frame, a Probe request frame, a Probe response frame, an Authentication frame, an Association request frame, an Association response frame, and the like. The data frame includes a Data frame, a polling (CF-poll) frame, and the like. Each apparatus can recognize the frame type and the subframe type of a received frame by interpreting contents of the frame control field included in the MAC header.

The beacon frame includes a Field indicating a periodicity at which a beacon is transmitted (Beacon interval) and an SSID. The access point apparatus may periodically broadcast a beacon frame within a BSS, and each station apparatus may recognize the access point apparatus in the surroundings of the station apparatus by receiving the beacon frame. The action of the station apparatus recognizing the access point apparatus based on the beacon frame broadcast from the access point apparatus may be referred to as Passive scanning. On the other hand, the action of the station apparatus searching for the access point apparatus by broadcasting a probe request frame in the BSS may be referred to as Active scanning. The access point apparatus may transmit a probe response frame in response to the probe request frame, and details of the probe response frame are similar to those of the beacon frame.

A station apparatus recognizes an access point apparatus and then performs association processing with respect to the access point apparatus. The association processing is classified into an Authentication procedure and an Association procedure. A station apparatus transmits an authentication request frame to an access point apparatus that the station apparatus desires to associate with. Once the access point apparatus receives the authentication request frame, then the access point apparatus transmits, to the station apparatus, an authentication response frame including a status code indicating whether authentication can be made for the station apparatus. The station apparatus can determine whether the authentication request of the station apparatus has been allowed by the access point apparatus by interpreting the status code included in the authentication response frame. Note that the access point apparatus and the station apparatus may exchange the authentication request frame and the authentication response frame (both are also collectively referred to as an authentication frame) multiple times.

After the authentication procedure, the station apparatus transmits an association request frame to the access point apparatus in order to perform the association procedure. Once the access point apparatus receives the association request frame, the access point apparatus determines whether to allow association of the station apparatus and transmits an association response frame to notify the station apparatus of the intent. In the association response frame, an Association IDentifier (AID) for identifying the station apparatus is included in addition to the status code indicating whether to perform the association processing. The access point apparatus can manage multiple station apparatuses by configuring different AIDs for the station apparatuses for which the access point apparatus has allowed association.

After the association processing is performed, the access point apparatus and the station apparatus perform actual data transmission. In the IEEE 802.11 system, a Distributed Coordination Function (DCF), a Point Coordination Function (PCF), and a Hybrid Coordination Function (HCF) which is an enhanced function of these are defined. In the HCF, as a specific implementation means, Enhanced Distributed Channel Access (EDCA) and HCF Controlled Channel Access (HCCA) are defined.

First, an example of an operation of a case that the access point apparatus transmits a signal to the station apparatus based on the DCF will be described. In the DCF, the access point apparatus and the station apparatus perform Carrier Sense (CS) for checking usage of a radio channel in the surroundings of the apparatuses prior to communication. For example, in a case that the access point apparatus and the station apparatus to transmit a frame receive a signal of received power higher than a predefined Clear Channel Assessment level (CCA level) on a radio channel during a period of carrier sense performed prior to transmission, the access point apparatus and the station apparatus postpone transmission of the frame on the radio channel. Hereinafter, a state in which a signal having received power of a level that is equal to or higher than the CCA level is detected on the radio channel will be referred to as a busy (Busy) state, and a state in which a signal having received power of a level that is equal to or higher than the CCA level is not detected will be referred to as an idle (Idle) state. In this manner, CS performed based on a power level of a signal actually received by each apparatus (reception power level) is called physical carrier sense (physical CS). Note that the CCA level is also called a carrier sense level (CS level) or a CCA Threshold (CCAT). Note that, in a case that a signal having received power of a level that is equal to or higher than the CCA level has been detected, the access point apparatus and the station apparatus start to perform an operation of demodulating at least a signal of the PHY layer.

The access point apparatus performs carrier sense in a period of an Inter Frame Space (IFS) in accordance with the type of the frame to be transmitted and determines whether the radio channel is in a busy state or idle state. A period in which the access point apparatus performs carrier sense varies depending on the frame type and the subframe type of the frame to be transmitted by the access point apparatus. In the IEEE 802.11 system, multiple IFSs with different periods are defined, and there are a short frame interval (Short IFS or SIFS) used for a frame with the highest priority given, a polling frame interval (PIFS or PCF IFS) used for a frame with a relatively high priority, a distributed coordination frame interval (DIPS or DCF IFS) used for a frame with a low priority, and the like. In a case of transmission of a data frame with the DCF, the access point apparatus uses the DIFS.

The access point apparatus waits for a DIFS period and then further waits for a random backoff time to prevent frame collision. In the IEEE 802.11 system, a random backoff time based on a Contention Window (CW) is used. CSMA/CA works with the assumption that a frame transmitted by a certain transmitting station is received by a receiving station in a state in which there is no interference from other transmitting stations. Therefore, in a case that multiple transmitting stations transmit frames at the same timing, the frames may collide against each other, and the receiving station may fail to receive them properly. Thus, each transmitting station waits for a randomly configured time before starting transmission, and thus collision of frames can be avoided. In a case that the access point apparatus determines, through carrier sense, that a radio channel is in the idle state, the access point apparatus starts to count down a backoff counter configured based on the CW, acquires a transmission right for the first time after the backoff counter becomes zero, and can transmit a frame to the station apparatus. Note that, in a case that the access point apparatus determines through the carrier sense that the radio channel is in the busy state during the count-down of the backoff counter, the access point apparatus stops the count-down of the backoff counter. Then, in a case that the radio channel enters the idle state again, the access point apparatus waits for the same period as the IFS described above, and resumes the rest of the count-down of the count-down of the backoff counter described above.

A station apparatus that is a receiving station receives a frame, interprets the PHY header of the frame, and demodulates the received frame. Then, the station apparatus interprets the MAC header of the demodulated signal and thus can recognize whether the frame is addressed to the station apparatus itself. Note that the station apparatus may also determine the destination of the frame based on information included in the PHY header (for example, a Group Identifier (Group ID or GID) included in VHT-SIG-A).

In a case that the station apparatus determines that the received frame is addressed to the station apparatus and successfully demodulates the frame without any error, the station apparatus is to transmit an Ack frame indicating the proper reception of the frame to the access point apparatus that is the transmitting station. The Ack frame is one of frames with the highest priority transmitted only after a wait for the SIFS period (with no random backoff time). The access point apparatus ends the series of communication with the reception of the Ack frame transmitted from the station apparatus. Note that, in a case that the station apparatus fails to receive the frame properly, the station apparatus does not transmit the Ack frame. Thus, in a case that the Ack frame has not been received from the receiving station (station apparatus) for a certain period (a length of SIFS + Ack frame) after the transmission of the frame, the access point apparatus considers the communication to be failed and ends the communication. In this manner, an end of a single communication operation (also called a burst) in the IEEE 802.11 system is to be determined based on whether an Ack frame is received, except for special cases such as a case of transmission of a broadcast signal such as a beacon frame, a case that fragmentation for splitting transmission data is used, or the like.

In a case that the station apparatus determines that the received frame is not addressed to the station apparatus itself, the station apparatus configures a Network Allocation Vector (NAV) based on the Length of the frame included in the PHY header or the like. The station apparatus does not attempt transmission during the period configured in the NAV. In other words, because the station apparatus performs the same operation as in the case that the terminal apparatus determines the radio channel is in the busy state through physical CS for the period configured in the NAV, the communication control based on the NAV is also called virtual carrier sense (virtual CS). The NAV is also configured by an RTS frame or a CTS frame, which are introduced to solve a hidden terminal problem in addition to the case that the NAV is configured based on the information included in the PHY header.

Next, an example of an operation of a case that the access point apparatus transmits a signal to the station apparatus based on the PCF will be described. Unlike the DCF in which each apparatus performs carrier sense and autonomously acquires the transmission right, with respect to the PCF, a control station called a Point Coordinator (PC) controls the transmission right of each apparatus within a BSS. In general, an access point apparatus serves as a PC and acquires the transmission right of a station apparatus within a BSS.

A communication period using the PCF includes a Contention Free Period (CFP) and a Contention Period (CP). Communication is performed based on the aforementioned DCF during a CP, and a PC controls the transmission right during a CFP. The access point apparatus serving as a PC broadcasts a beacon frame including information of a CFP period (CFP Max duration) and the like in a BSS prior to communication with a PCF. Note that the PIPS is used for transmission of the beacon frame broadcast at the time of a start of transmission by the PCF, and the beacon frame is transmitted without waiting for the CW. The station apparatus that has received the beacon frame configures the CFP Max duration included in the beacon frame in a NAV. Hereinafter, the station apparatus can acquire the transmission right only in a case that a signal (e.g., a data frame including CF-poll) for signaling the acquisition of the transmission right for the station apparatus is received from the PC, until the period configured in the NAV elapses or a signal (e.g., a data frame including CF-end) broadcasting the end of the CFP in the BSS is received. Note that, because no packet collision occurs in the same BSS during the CFP period, each station apparatus does not take a random backoff time used for the DCF.

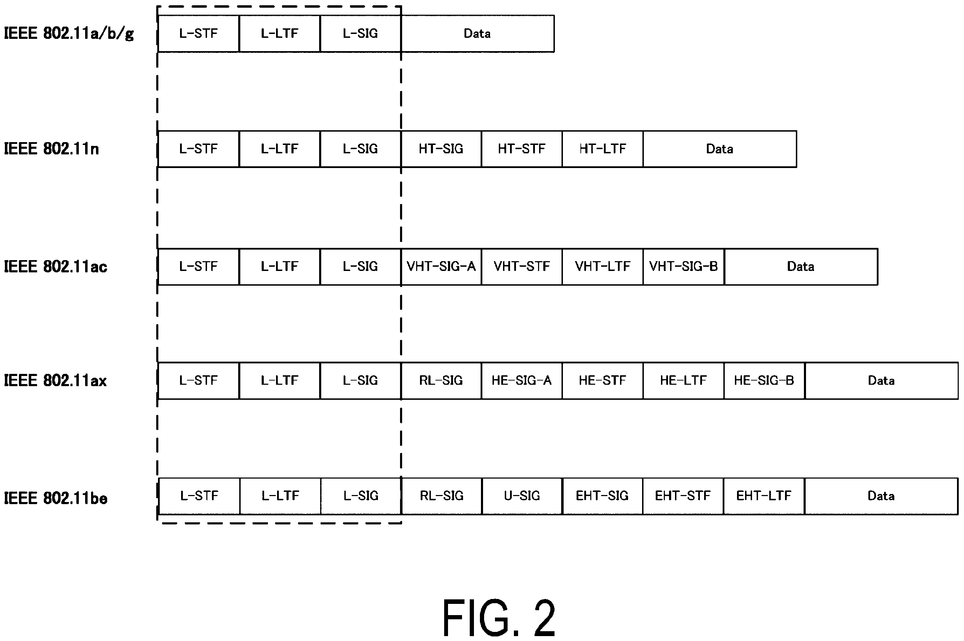

A radio communication apparatus includes any one of or both the function of transmitting a PPDU and a function of receiving a PPDU. FIG. 2 is a diagram illustrating an example of a PPDU configuration transmitted by the radio communication apparatus. A PPDU that is compliant with the IEEE 802.11a/g standard includes L-STF, L-LTF, L-SIG, and a Data frame (a MAC frame, a payload, a data part, data, information bits, and the like). A PPDU that is compliant with the IEEE 802.11n standard includes L-STF, L-LTF, L-SIG, HT-SIG, HT-STF, HT-LTF, and a Data frame. A PPDU that is compliant with the IEEE 802.11 ac standard includes some or all of L-STF, L-LTF, L-SIG, VHT-SIG-A, VHT-STF, VHT-LTF, VHT-SIG-B, and a Data frame. The PPDU that is compliant with the IEEE 802.11 ax standard includes some or all of L-STF, L-LTF, L-SIG, RL-SIG in which L-SIG is temporally repeated, HE-SIG-A, HE-STF, HE-LTF, HE-SIG-B, and a Data frame. A PPDU studied in IEEE 802.11be standardization includes some or all of L-STF, L-LTF, L-SIG, RL-SIG, U-SIG, EHT-SIG, EHT-STF, HET-LTF, and a Data frame.

L-STF, L-LTF, and L-SIG surrounded by the dotted line in FIG. 2 are configurations commonly used in the IEEE 802.11 standard (hereinafter, L-STF, L-LTF, and L-SIG will also be collectively referred to as an L-header). For example, a radio communication apparatus that is compliant with the IEEE 802.11a/g standard can appropriately receive an L-header in a PPDU that is compliant with the IEEE 802.11n/ac/ax/be standard. A radio communication apparatus that is compliant with the IEEE 802.11a/g standard can receive the PPDU that is compliant with the IEEE 802.1 1n/ac/ax/be standard while considering it to be a PPDU that is compliant with the IEEE 802.11a/g standard.

However, because the radio communication apparatus that is compliant with the IEEE 802.11a/g standard cannot demodulate the PPDU that is compliant with the IEEE 802.11n/ac/ax/be standard following the L-header, it is not possible to demodulate information about a Transmitter Address (TA), a Receiver Address (RA), a Duration/ID field, and the like.

As a method for the radio communication apparatus that is compliant with the IEEE 802.11a/g standard to appropriately configure the NAV (or perform a receiving operation for a prescribed period), IEEE 802.11 defines a method of inserting Duration information to the L-SIG. Information about a transmission speed in the L-SIG (a RATE field, an L-RATE field, an L-RATE, an L_DATARATE, and an L_DATARATE field) and information about a transmission period (a LENGTH field, an L-LENGTH field, and an L-LENGTH) are used by the radio communication apparatus that is compliant with the IEEE 802.11a/g standard to appropriately configure a NAV.

The radio communication apparatus may transmit L-SIG multiple times (L-SIG Repetition). In this case, demodulation accuracy of L-SIG can be improved by the radio communication apparatus on the reception side receiving L-SIG transmitted multiple times by using Maximal Ratio Combining (MRC), for example. Moreover, in a case that reception of L-SIG is properly completed using MRC, the radio communication apparatus can interpret the PPDU including the L-SIG as a PPDU that is compliant with the IEEE 802.11ax or IEEE 802.11be standard.

Even during the operation of receiving the PPDU, the radio communication apparatus may perform a reception operation of a PPDU other than the corresponding PPDU (e.g., the preamble, L-STF, L-LTF, and the PHY header prescribed by IEEE 802.11) (also referred to as a double-reception operation). In a case that a part of a PPDU other than the PPDU is detected during the operation of receiving the PPDU, the radio communication apparatus may update a part or an entirety of information about a destination address, a transmission source address, a PPDU, or a Data period.

An Ack and a BA may also be referred to as a response (response frame). A probe response, an authentication response, and an association response may also be referred to as a response.

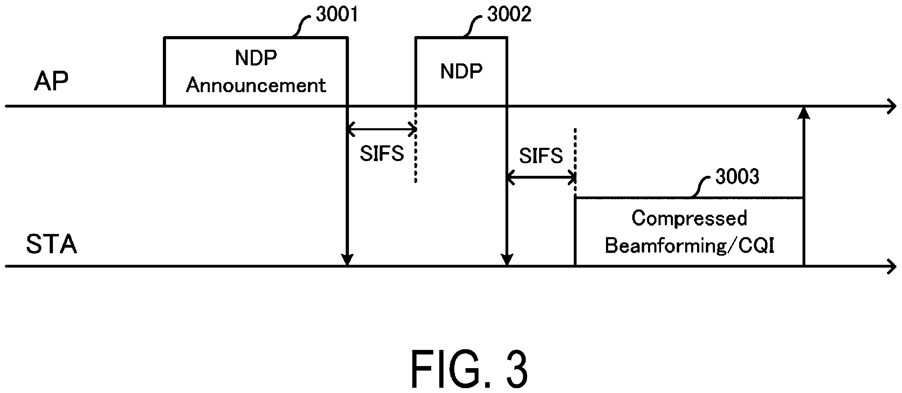

FIG. 3 is a diagram illustrating an example of a sounding procedure with the aim of channel estimation of a radio communication path in IEEE 802.11ax. In an example of FIG. 3, first, the access point apparatus (AP) transmits information indicating the station apparatus (STA) as a target of sounding to be performed (to be a receiver of a sounding frame) and a Null Data PPDU (NDP) Announcement frame 3001 indicating a type of feedback information and the like. The access point apparatus further transmits an NDP frame 3002 including a training field for channel estimation after the SIFS period from the NDP Announcement frame. The station apparatus performs channel estimation based on the received NDP frame 3002, and transmits a frame for feeding channel estimation results back to the access point apparatus, for example, a Compressed Beamforming/CQI frame 3003, after the SIFS period from the NDP frame 3002.

### 1. First Embodiment

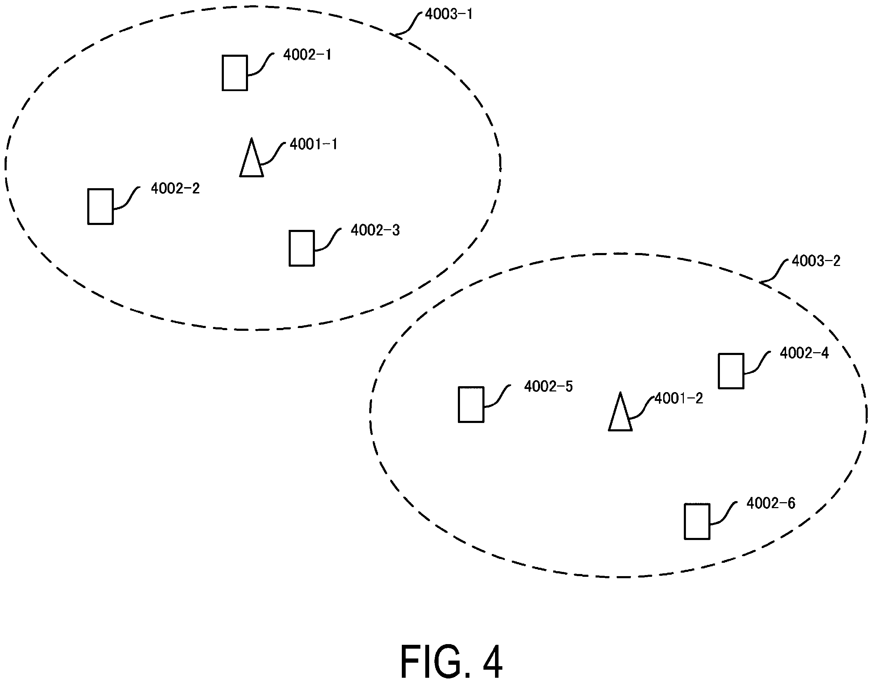

FIG. 4 is a diagram illustrating an example of a radio communication system according to the present embodiment. A radio communication system 4003-1 includes a radio communication apparatus 4001-1 and radio communication apparatuses 4002-1 to 4002-3. Note that the radio communication apparatus 4001-1 is also referred to as an access point apparatus 4001-1, and the radio communication apparatuses 4002-1 to 4002-3 are also referred to as station apparatuses 4002-1 to 3. Each of the radio communication apparatuses 4002-1 to 4002-3 (station apparatuses 4002-1 to 4002-3) is also referred to as a radio communication apparatus 4002A (station apparatus 4002A) as an apparatus associated with the radio communication apparatus 4001-1. The radio communication apparatus 4001-1 and the radio communication apparatus 4002A are wirelessly associated with each other and are in a state in which they can transmit and/or receive PPDUs to and from each other. The radio communication system according to the present embodiment may include a radio communication system 4003-2 in addition to the radio communication system 4003-1. The radio communication system 4003-2 includes a radio communication apparatus 4001-2 and radio communication apparatuses 4002-4 to 4002-6. Note that the radio communication apparatus 4001-2 is also referred to as an access point apparatus 4001-2, and the radio communication apparatuses 4002-4 to 4002-6 are also referred to as station apparatuses 4002-4 to 4002-6. Each of the radio communication apparatuses 4002-4 to 4002-6 (station apparatuses 4002-4 to 4002-6) is also referred to as a radio communication apparatus 4002B (station apparatus 4002B) as an apparatus associated with the radio communication apparatus 4001-2. Furthermore, in a case that the radio communication apparatus 4001-1 and the radio communication apparatus 4001-2 (access point apparatuses 4001-1 and 4001-6) are described without being individually identified, they are also referred to as radio communication apparatus(es) 4001 (access point apparatus(es) 4001), and in a case that the radio communication apparatuses 4002-1 to 4002-6 (station apparatuses 4002-1 to 4002-6) are described without being individually identified, they are also referred to as radio communication apparatus(es) 4002 (station apparatus(es) 4002). Although the radio communication system 4003-1 and the radio communication system 4003-2 form different BSSs, this does not necessarily mean that Extended Service Sets (ESSs) representing service sets to form Local Area Networks (LANs) are different. In other words, radio communication apparatuses belonging to the same ESS can be regarded as belonging to the same network from a higher layer. The BSSs are connected via a Distribution System (DS) and form an ESS. Note that each of the radio communication systems 4003-1 and 4003-2 may further include multiple radio communication apparatuses.

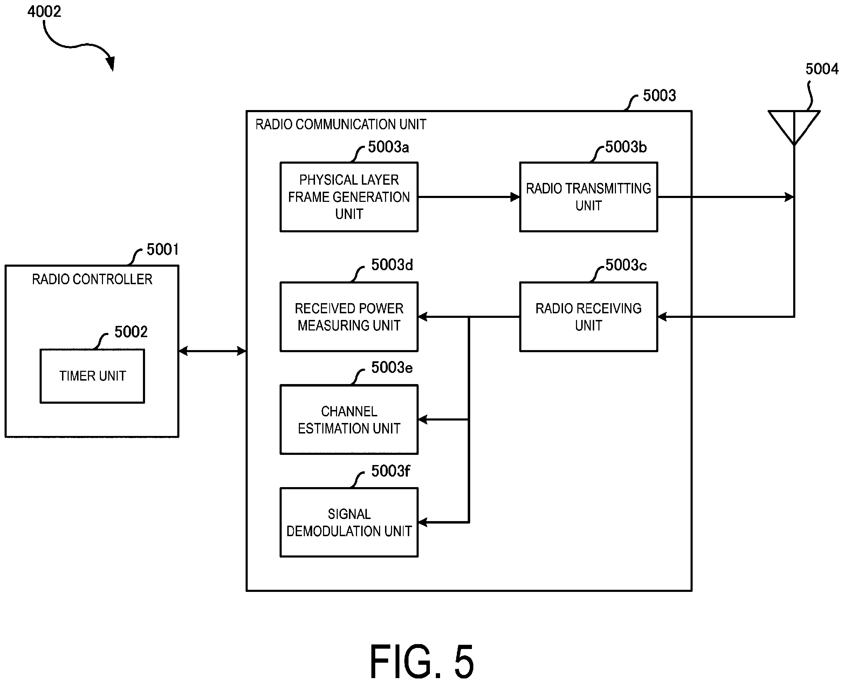

FIG. 5 is a diagram illustrating an example of a configuration of the station apparatus 4002. The station apparatus 4002 includes a radio controller (radio control step) 5001, a timer unit (timer step) 5002, a radio communication unit (radio communication step) 5003, and an antenna unit 5004. The radio communication unit 5003 further includes a physical layer frame generation unit (physical layer frame generation step) 5003a, a radio transmitting unit (radio transmitting step) 5003b, a radio receiving unit (radio receiving step) 5003c, a received power measuring unit (received power measuring step) 5003d, a channel estimation unit (channel estimation step) 5003e, and a signal demodulation unit (signal demodulation step) 5003f.

Regarding information handled in the radio communication apparatus (information related to a frame to be transmitted, a Management Information Base (MIB), and the like) and a frame received from another radio communication apparatus, the radio controller 5001 performs information processing of layers higher than the physical layer, such as the MAC layer and the LLC layer, and performs control of the radio communication unit 5003.

The timer unit 5002 includes one or multiple timers, and performs management of the timer(s) related to the sounding process. Details of the timer unit 5002 will be described later. Note that, although an example of FIG. 5 illustrates a configuration in which the timer unit 5002 is included in the radio controller 5001, the configuration is not restrictive, and the timer unit 5002 may be provided outside the radio controller 5001, and may operate via control from the radio controller 5001.

The physical layer frame generation unit 5003a includes a function of generating a physical layer frame (PPDU). The physical layer frame generation unit 5003a performs error correction coding, modulation, beamforming processing (precoding processing), and the like on a MAC layer frame transmitted from the radio controller 5001. The beamforming processing may be implemented by multiplying a modulated signal by a beamforming matrix (beamforming filter) notified from the radio controller 5001. The physical layer frame generation unit 5003a outputs a generated physical layer frame to the radio transmitting unit 5003b.

The radio transmitting unit 5003b converts a physical layer frame input from the physical layer frame generation unit 5003a into a signal of a Radio Frequency (RF) band, and generates a radio signal. Processing performed by the radio transmitting unit 5003b includes digital-analog conversion, filtering, frequency conversion from a baseband frequency to a radio frequency, and the like. The radio transmitting unit 5003b transmits the generated radio signal via the antenna unit 5004.

The radio receiving unit 5003c includes a function of converting the radio signal received via the antenna unit 5004 into a baseband signal, and generating a physical layer signal (for example, a physical layer frame). Processing performed by the radio receiving unit 5003c includes frequency conversion processing from a radio frequency to a baseband frequency, filtering, analog-digital conversion, and the like. The physical layer signal being the received signal converted into a digital signal in the radio receiving unit 5003c is input to the received power measuring unit 5003d, the channel estimation unit 5003e, and the signal demodulation unit 5003f.

The received power measuring unit 5003d measures received power of the received signal input from the radio receiving unit 5003c. The received power measuring unit 5003d may measure received power related to radio waves received on a frequency channel to be measured, received power of the LTF of a received physical layer frame, and the like. The received power measuring unit 5003d may notify the radio controller 5001 of measurement results of the received power.

The channel estimation unit 5003e performs estimation of a channel state transmitted by the physical layer frame, based on the received signal of the LTF (the L-LTF, the HT-LTF, the VHT-LTF, the HE-LTF, or the like) included in the physical layer frame received in the radio receiving unit 5003c. The channel estimation unit 5003e may notify the signal demodulation unit 5003f and the radio controller 5001 of channel estimation results.

The signal demodulation unit 5003f performs channel equalization, demodulation, error correction decoding, and the like on the physical layer frame received in the radio receiving unit 5003c, and acquires information such as the PHY header and the MAC layer frame. For the processing of channel equalization, the channel estimation results in the channel estimation unit 5003e and the like may be used. The signal demodulation unit 5003f outputs the acquired PHY header and MAC layer frame to the radio controller 5001.

The radio controller 5001 performs physical carrier sense and virtual carrier sense, based on the received power measurement results in the received power measuring unit 5003d and the information acquired in the signal demodulation unit 5003f, and may thereby perform state determination (including determination as to whether the state is the idle state or the busy state) of the radio channel. The radio controller 5001 may notify the radio communication unit 5003 of the state determination information of the radio channel.

In a case that there is control information, data, or the like to be transmitted, the radio controller 5001 may initiate a backoff procedure, using the state determination information of the radio channel. The radio controller 5001 generates a backoff counter based on the CW, and includes a count-down function for the backoff counter. For example, in a case that the state determination information of the radio channel indicates the idle state, the radio controller 5001 may perform the count-down of the backoff counter, whereas in a case that the state determination information of the radio channel indicates the busy state, the radio controller 5001 may stop the count-down of the backoff counter. Furthermore, the radio controller 5001 performs transmission determination using one or both of the state determination information of the radio channel and a value of the backoff counter. For example, in a case that the state determination information of the radio channel indicates the idle state and the value of the backoff counter is 0, the radio controller 5001 may notify the radio communication unit 5003 of transmission determination information. In a case that the state determination information of radio resources indicates the idle state, the radio controller 5001 may notify the radio communication unit 5003 of the transmission determination information.

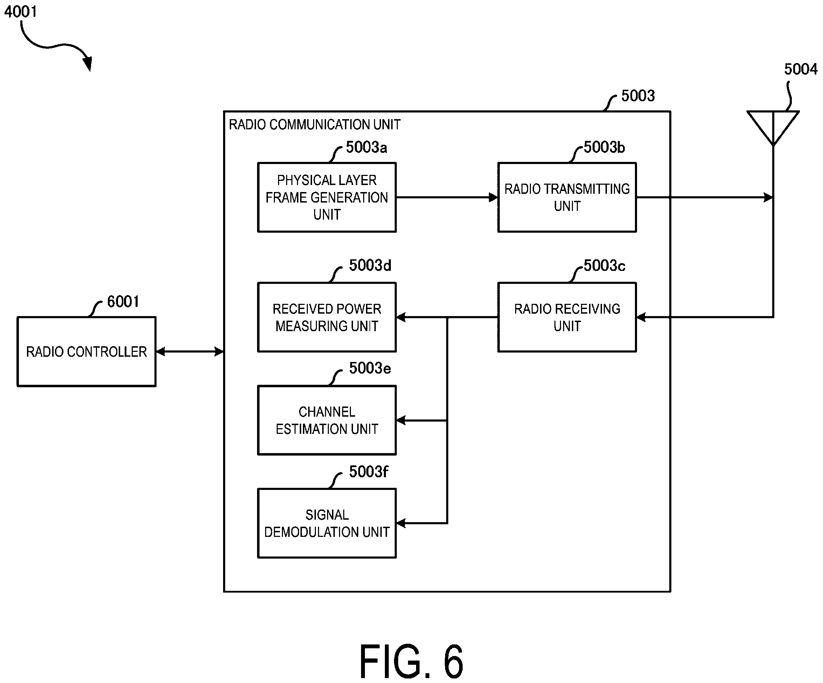

FIG. 6 is a diagram illustrating an example of a configuration of the access point apparatus 4001. The access point apparatus 4001 includes a radio controller (radio control step) 6001, a radio communication unit (radio communication step) 5003, and an antenna unit 5004. The radio communication unit 5003 further includes a physical layer frame generation unit (physical layer frame generation step) 5003a, a radio transmitting unit (radio transmitting step) 5003b, a radio receiving unit (radio receiving step) 5003c, a received power measuring unit (received power measuring step) 5003d, a channel estimation unit (channel estimation step) 5003e, and a signal demodulation unit (signal demodulation step) 5003f. The access point apparatus 4001 of the FIG. 6 basically has a configuration similar to that of the station apparatus 4002 of FIG. 5 as well. Thus, in the following, differences between the both will be mainly described, and description of similarities will be omitted. Parts corresponding to the station apparatus of FIG. 5 are denoted by the same reference signs for description.

Regarding information handled in the radio communication apparatus (information related to a frame to be transmitted, a Management Information Base (MIB), and the like) and a frame received from another radio communication apparatus, the radio controller 6001 performs information processing of layers higher than the physical layer, such as the MAC layer and the LLC layer, and performs control of the radio communication unit 5003.

The physical layer frame generation unit 5003a includes a function of generating a physical layer frame (PPDU). The physical layer frame generation unit 5003a performs error correction coding, modulation, beamforming processing (precoding processing), and the like on a MAC layer frame transmitted from the radio controller 6001. The beamforming processing may be implemented by multiplying a modulated signal by a beamforming matrix (beamforming filter) notified from the radio controller 6001. The physical layer frame generation unit 5003a outputs a generated physical layer frame to the radio transmitting unit 5003b.

The received power measuring unit 5003d measures received power of the received signal input from the radio receiving unit 5003c. The received power measuring unit 5003d may measure received power related to radio waves received on a frequency channel to be measured, received power of the LTF (the L-LTF, the HT-LTF, the VHT-LTF, the HE-LTF, or the like) of a received physical layer frame, and the like. The received power measuring unit 5003d may notify the radio controller 6001 of measurement results of the received power.

The channel estimation unit 5003e performs estimation of a channel state transmitted by the physical layer frame, based on the received signal of the LTF included in the physical layer frame received in the radio receiving unit 5003c. The channel estimation unit 5003e may notify the signal demodulation unit 5003f and the radio controller 6001 of channel estimation results.

The signal demodulation unit 5003f performs channel equalization, demodulation, error correction decoding, and the like on the physical layer frame received in the radio receiving unit 5003c, and acquires information such as the PHY header and the MAC layer frame. For the processing of channel equalization, the channel estimation results in the channel estimation unit 5003e and the like may be used. The signal demodulation unit 5003f outputs the acquired PHY header and MAC layer frame to the radio controller 6001.

In a case that there is control information, data, a beacon, or the like to be transmitted, the radio controller 6001 may initiate a backoff procedure, using the state determination information of the radio channel. The radio controller 6001 generates a backoff counter based on the CW, and includes a count-down function for the backoff counter. For example, in a case that the state determination information of the radio channel indicates the idle state, the radio controller 6001 may perform the count-down of the backoff counter, whereas in a case that the state determination information of the radio channel indicates the busy state, the radio controller 6001 may stop the count-down of the backoff counter. Furthermore, the radio controller 6001 performs transmission determination using one or both of the state determination information of the radio channel and a value of the backoff counter. For example, in a case that the state determination information of the radio channel indicates the idle state and the value of the backoff counter is 0, the radio controller 6001 may notify the radio communication unit 5003 of transmission determination information. In a case that the state determination information of radio resources indicates the idle state, the radio controller 6001 may notify the radio communication unit 5003 of the transmission determination information.

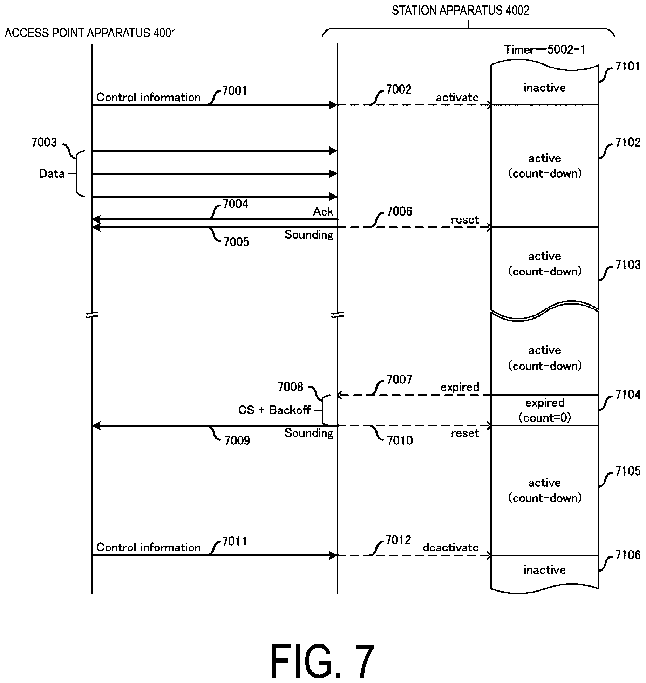

FIG. 7 is a diagram illustrating an example of a sounding procedure in the radio communication system according to the present embodiment. FIG. 7 assumes a state in which association of a radio link (first radio link) between the access point apparatus 4001 and the station apparatus 4002 has been established, and illustrates an example of a communication flow in the radio link on the left side and an example of state transition of a timer 5002-1 (also referred to as a first timer) included in the timer unit 5002 of the station apparatus 4002 on the right side. FIG. 7 assumes that the timer 5002-1 is in an inactive state (7101) at the start.

The access point apparatus 4001 generates control information (first control information) including configuration information related to the timer 5002-1 included in the station apparatus 4002, a sounding frame transmission condition from the station apparatus 4002, and the like, and transmits a radio frame 7001 including the control information to the station apparatus 4002. The configuration information related to the timer 5002-1 may include a timer count initial value, a timer count expiration value, timer activation indication information, timer reset indication information, timer reset timing information, and the like.

The station apparatus 4002 that has received the radio frame 7001 including the first control information acquires the first control information included in the radio frame 7001, and configures the timer count initial value and the like of the timer 5002-1 in accordance with the first control information and then performs activation (7002). Through the activation 7002, the timer 5002-1 is reset to the timer count initial value, transitions from the inactive state 7101 to an active state 7102, and initiates the count-down operation. While being in the active state, the timer 5002-1 continues the count-down. Note that FIG. 7 illustrates an example in which configuration, reset, activation, count-down start, and the like of the timer count initial value and the like of the timer 5002-1 are performed at one time based on reception of the radio frame 7001, but this is not restrictive, and for example, configuration and reset and activation and count-down start of the timer count initial value and the like may be performed with different radio frames (control information included therein) being a trigger.

FIG. 7 illustrates an example in which the timer 5002-1 is assumed to be a count-down timer, in which the value becomes the timer count initial value configured in advance due to reset and the state enters an expiration state at count 0, but this is not restrictive, and for example, the timer count expiration value may be separately configured to other than 0. Alternatively, the timer 5002-1 may be a count-up timer, which is initialized to count 0 due to reset, in which the state enters the expiration state in a case that the count reaches the timer count expiration value configured in advance.

In a case that the station apparatus 4002 receives a radio frame (first radio frame) 7003 that requires a response and no error is detected in the radio frame 7003, the station apparatus 4002 transmits an Ack frame 7004 as a response frame in response to the radio frame 7003 and subsequently transmits a sounding frame 7005 (the sounding frame transmitted on the first radio link is hereinafter also referred to as a first sounding frame), and resets the timer 5002-1 to the timer count initial value (7006). The reset timer 5002-1 continues to be in the active state (7103), and starts the count-down from the timer count initial value. Note that the timing of the reset (7006) of the timer 5002-1 is not limited to the time of transmission of the sounding frame 7005, and may be configured within a range in which the effects do not change, for example, between a timing of transmission of the Ack frame 7004 and a timing of transmission of the sounding frame 7005.

The radio frame that requires a response is not limited to the data frame, and may be a frame including the control information that requires a response. It is preferable that transmission of the Ack frame 7004 and transmission of the sounding frame 7005 be performed in an interval of the SIFS, but this is not restrictive, and another IFS used in a case of a high priority may be used. Furthermore, the Ack frame and the sounding frame may be concatenated to be transmitted. A frame obtained by concatenating the Ack frame and the sounding frame may be newly defined, and the frame may be transmitted.

At the time of reception of the radio frame 7003, only in a case that the count of the timer 5002-1 has reached a prescribed value (prescribed value or less), transmission of the sounding frame 7005 may be performed to reset the timer 5002-1. In this case, transmission of the sounding frame is prevented in a case that the timer 5002-1 has not reached the prescribed value, that is, elapsed time from previous sounding frame transmission is less than the prescribed time, and thus overhead due to sounding frame transmission can be reduced.

The radio frame 7003 may be a data frame for transmitting the A-MPDU in which multiple MPDUs are aggregated, and the Ack frame may be a BlockAck frame. In a case that the BlockAck frame is used, only in a case that the number or a ratio of the acknowledgment responses included in the BlockAck is less than the prescribed value, transmission of the sounding frame 7005 may be performed to reset the timer 5002-1. In this case, transmission of the sounding frame is prevented in a case that the timer 5002-1 has not entered the expiration state and the state of the radio link is satisfactory, and thus overhead due to sounding frame transmission can be reduced.

In a case that the count of the timer 5002-1 reaches 0 and the state enters the expiration state (7104), the station apparatus 4002 enters a sounding frame transmission standby state (7007). In a case that the timer 5002-1 expires, the station apparatus 4002 performs carrier sense and confirms that the radio channel is in the idle state, and then initiates the backoff procedure (7008). In a case that the radio channel is in the idle state during the backoff period, the station apparatus 4002 transmits a sounding frame 7009 and resets the timer 5002-1 (7010). The timer 5002-1 is reset to the timer count initial value and transitions to the active state, and initiates the count-down operation (7105).

In a case that the station apparatus 4002 receives a radio frame 7011 including control information (fourth control information) including information such as release of configuration related to the timer 5002-1, the station apparatus 4002 deactivates the timer 5002-1 (7012). The deactivated timer 5002-1 stops the count-down operation, and transitions to an inactive state 7106.

As the sounding frames 7005 and 7009, for example, two frames, namely the NDP frame or the NDP Announcement frame and the NDP frame, as a pair may be used, but these are not restrictive, and frames including a signal that enables estimation of a channel between the station apparatus 4002 and the access point apparatus 4001 may be used.

The access point apparatus 4001 that has received the sounding frames 7005 and 7009 from the station apparatus 4002 may, for example, perform channel estimation between the station apparatus 4002 and the access point apparatus 4001 based on the received sounding frames, and calculate a channel matrix and a beamforming matrix (beamforming filter) and the like.

As a modification, in a case that other control information (third control information) is received without directly receiving the first control information from the access point apparatus 4001, information corresponding to the first control information may be generated in the station apparatus 4002, based on the received control information. As an example, in a case that configuration information related to a Quality of Service (QoS) is received, the station apparatus 4002 may configure the timer count initial value and the like of the timer 5002-1 and then perform activation (7002). The station apparatus 4002 may change the timer count initial value and the like, depending on a requirement required as the QoS. In a case that allowable delay time is configured short, the timer count initial value may be reduced. In a case that bit rate guarantee is configured, the timer count initial value may be reduced. The station apparatus 4002 may configure the timer count initial value and the like of the timer 5002-1, based on Capability information exchanged with the access point apparatus 4001. The configuration of the QoS may be configured by the access point apparatus 4001 according to the current traffic state, or may be configured by an application performed on a network. The application performed on a network may acquire the configuration of the QoS via the access point apparatus 4002.

As a modification, in a case that other control information is received without directly receiving the fourth control information from the access point apparatus 4001, information corresponding to the fourth control information may be generated in the station apparatus 4002, based on the received control information. As an example, in a case that configuration information related to a QoS is received, the station apparatus 4002 may deactivate the timer 5002-1 (7012). In a case that the allowable delay time is configured long, the timer 5002-1 may be deactivated. In a case that best effort is configured for the configuration of the bit rate, the timer 5002-1 may be deactivated.

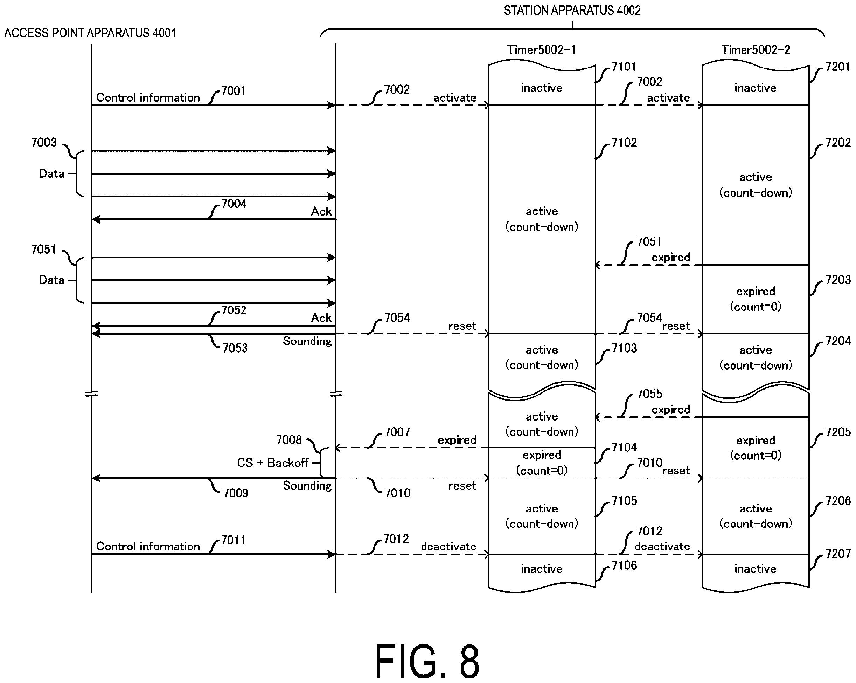

As a modification, FIG. 8 illustrates an example of a sounding procedure of a case that the timer unit 5002 of the station apparatus 4002 includes a timer 5002-2 (also referred to as a third timer) in addition to the timer 5002-1 (first timer). In the following, differences from the example of the sounding procedure in FIG. 7 will be mainly described, and description of similarities will be omitted. Parts corresponding to FIG. 7 are denoted by the same reference signs for description.

FIG. 8 assumes a state in which association of a radio link (first radio link) between the access point apparatus 4001 and the station apparatus 4002 has been established, and illustrates an example of a communication flow in the radio link on the left side and an example of state transition of the timer 5002-1 and the timer 5002-2 included in the timer unit 5002 of the station apparatus 4002 on the right side. FIG. 8 assumes that each of the timer 5002-1 and the timer 5002-2 is in an inactive state (7101, 7201) at the start.

Unlike the example of FIG. 7, the first control information included in the radio frame 7001 transmitted by the access point apparatus 4001 to the station apparatus 4002 is generated to also include configuration information related to the timer 5002-2 in addition to the configuration information related to the timer 5002-1, the sounding frame transmission condition from the station apparatus 4002, and the like, and the radio frame 7001 including the control information is transmitted to the station apparatus 4002. The configuration information related to the timer 5002-1 and the timer 5002-2 may include a timer count initial value, a timer count expiration value, timer activation indication information, timer reset indication information, timer reset timing information, and the like related to each of the timers. Here, each piece of configuration information may be selected such that time until timer expiration in the timer 5002-2 is shorter than time (the number of counts) until timer expiration in the timer 5002-1.

The station apparatus 4002 that has received the radio frame 7001 including the first control information acquires the first control information included in the radio frame 7001, and configures the timer count initial value and the like of the timer 5002-1 and the timer 5002-2 in accordance with the first control information and then performs activation of both of the timers (7002, 7202). Through the activation 7002, the timer 5002-1 and the timer 5002-2 are reset to the timer count initial value, respectively transition from the inactive state 7101 and the inactive state 7201 to the active state 7102 and the active state 7202, and initiate the count-down operation. While being in the active state, the timer 5002-1 and the timer 5002-2 continue the count-down. Note that FIG. 8 illustrates an example in which configuration, reset, activation, count-down start, and the like of the timer count initial value and the like of the timer 5002-1 and the timer 5002-2 are performed at one time based on reception of the radio frame 7001, but this is not restrictive, and for example, configuration and reset and activation and count-down start of the timer count initial value and the like may be performed with different radio frames (control information included therein) being a trigger.

FIG. 8 illustrates an example in which each of the timer 5002-1 and the timer 5002-2 is assumed to be a count-down timer, in which the value becomes the timer count initial value configured in advance due to reset and the state enters an expiration state at count 0, but this is not restrictive, and for example, the timer count expiration value may be separately configured to other than 0. Alternatively, each of the timer 5002-1 and the timer 5002-2 may be a count-up timer, which is initialized to count 0 due to reset, in which the state enters the expiration state in a case that the count reaches the timer count expiration value configured in advance.

In a case that the station apparatus 4002 receives the radio frame (first radio frame) 7003 that requires a response and no error is detected in the radio frame 7003, the station apparatus 4002 transmits the Ack frame 7004 as a response frame in response to the radio frame 7003. In this case, in a case that the timer 5002-2 is not in the expiration state (in the active state), unlike the example of FIG. 7, transmission of the sounding frame 7005 subsequent to the Ack frame 7004 is not performed. In this case, reset of the timer 5002-1 is not performed either, and the timer 5002-1 and the timer 5002-2 continue to be in the active state.

In a case that the active state continues, the timer 5002-2 reaches count 0 earlier than the timer 5002-1, and transitions to the expiration state (7203). In this case, the timer 5002-2 indicates that the timer 5002-2 is in the expiration state (7051).

In a case that the station apparatus 4002 receives a radio frame 7051 that requires a response and no error is detected in the radio frame 7051, the station apparatus 4002 transmits an Ack frame 7052 as a response frame in response to the radio frame 7051. In this case, in addition, in a case that the timer 5002-2 is in the expiration state (7203), a sounding frame 7053 is transmitted subsequently to the Ack frame 7052, and the timer 5002-1 and the timer 5002-2 are reset to the timer count initial value (7054). The reset timer 5002-1 and timer 5002-2 enter the active state (7103, 7204), and start the count-down from the timer count initial value. Note that the timing of the reset (7054) of the timer 5002-1 and the timer 5002-2 is not limited to the time of transmission of the sounding frame 7053, and may be configured within a range in which the effects do not change, for example, between a timing of transmission of the Ack frame 7052 and a timing of transmission of the sounding frame 7053.

The radio frame that requires a response is not limited to the data frame, and may be a frame including the control information that requires a response. It is preferable that transmission of the Ack frame 7052 and transmission of the sounding frame 7053 be performed in an interval of the SIFS, but this is not restrictive, and another IFS used in a case of a high priority may be used. Furthermore, the Ack frame and the sounding frame may be concatenated to be transmitted. A frame obtained by concatenating the Ack frame and the sounding frame may be newly defined, and the frame may be transmitted.

The radio frame 7051 may be a data frame for transmitting the A-MPDU in which multiple MPDUs are aggregated, and the Ack frame may be a BlockAck frame. In a case that the BlockAck frame is used, only in a case that the number or a ratio of the acknowledgment responses included in the BlockAck is less than the prescribed value, transmission of the sounding frame 7053 may be performed to reset the timer 5002-1 and the timer 5002-2. In this case, transmission of the sounding frame is prevented in a case that the timer 5002-1 has not entered the expiration state and the state of the radio link is satisfactory, and thus overhead due to sounding frame transmission can be reduced.

In a case that the timer 5002-2 reaches count 0 and indicates that the timer 5002-2 is in the expiration state (7205) (7055) and the count of the timer 5002-1 reaches 0 and the state enters the expiration state (7104), the station apparatus 4002 enters the sounding frame transmission standby state (7007). In a case that the timer 5002-1 expires, the station apparatus 4002 performs carrier sense and confirms that the radio channel is in the idle state, and then initiates the backoff procedure (7008). In a case that the radio channel is in the idle state during the backoff period, the station apparatus 4002 transmits the sounding frame 7009 and resets the timer 5002-1 and the timer 5002-2 (7010). Each of the timer 5002-1 and the timer 5002-2 is reset to the timer count initial value and transitions to the active state, and initiates the count-down operation (7105, 7206).

Unlike the example of FIG. 7, in the fourth control information included in the radio frame 7011 transmitted by the access point apparatus 4001 to the station apparatus 4002, information such as release of configuration related to the timer 5002-2 may be included in addition to the information such as the release of configuration related to the timer 5002-1. Note that the information of the release of configuration related to the timer 5002-2 may be information common to the information of the release of configuration related to the timer 5002-1. In a case that the station apparatus 4002 receives the radio frame 7011 including the fourth control information, the station apparatus 4002 deactivates the timer 5002-1 and the timer 5002-2 (7012). The deactivated timer 5002-1 and timer 5002-2 stop the count-down operation, and transition to inactive states 7106 and 7207.

As a modification, in a case that other control information is received without directly receiving the first control information from the access point apparatus 4001, information corresponding to the first control information may be generated in the station apparatus 4002, based on the received control information. As an example, in a case that configuration information related to a QoS is received, the station apparatus 4002 may configure the timer count initial value and the like of the timer 5002-1 and the timer 5002-2 and then perform activation (7002). The station apparatus 4002 may change each timer count initial value and the like, depending on a requirement required as the QoS. In a case that allowable delay time is configured short, each timer count initial value may be reduced. In a case that bit rate guarantee is configured, each timer count initial value may be reduced. The station apparatus 4002 may configure the timer count initial value and the like of the timer 5002-1 and the timer 5002-2, based on capability information exchanged with the access point apparatus 4001. The configuration of the QoS may be configured by the access point apparatus 4001 according to the current traffic state, or may be configured by an application performed on a network. The application performed on a network may acquire the configuration of the QoS via the access point apparatus 4002.

As a modification, in a case that other control information is received without directly receiving the fourth control information from the access point apparatus 4001, information corresponding to the fourth control information may be generated in the station apparatus 4002, based on the received control information. As an example, in a case that configuration information related to a QoS is received, the station apparatus 4002 may deactivate the timer 5002-1 and the timer 5002-2 (7012). In a case that the allowable delay time is configured long, the timer 5002-1 and the timer 5002-2 may be deactivated. In a case that best effort is configured for the configuration of the bit rate, the timer 5002-1 and the timer 5002-2 may be deactivated.

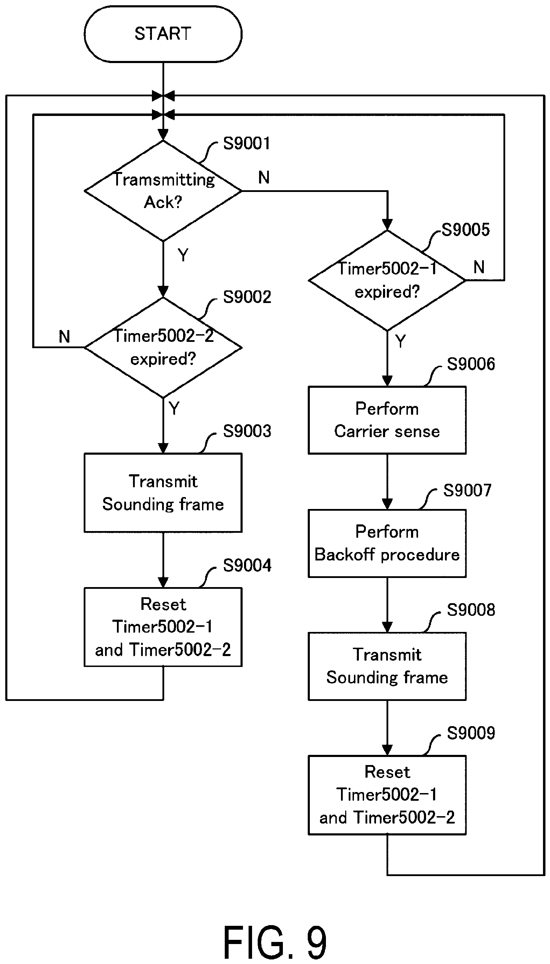

FIG. 9 illustrates a flowchart of an example of the sounding procedure in the station apparatus 4002 in a case that the timer 5002-1 and the timer 5002-2 are used.

In a case that the station apparatus 4002 transmits the Ack frame (Yes in Step S9001), whether the timer 5002-2 has expired is checked (Step S9002). In a case that the timer 5002-2 has expired (Yes in Step S9002), the sounding frame is transmitted subsequently to the Ack frame (Step S9003), the timer 5002-1 and the timer 5002-2 are reset (Step S9004), and the processing returns to Step S9001.

In a case of No in Step S9001, whether the timer 5002-1 has expired is checked (Step S9005). In a case that the timer 5002-1 has not expired (No in Step S9005), the processing returns to Step S9001. In a case that the timer 5002-1 has expired (Yes in Step S9005), carrier sense is performed (Step S9006), the backoff procedure is performed (Step S9007), the sounding frame is transmitted (Step S9008), the timer 5002-1 and the timer 5002-2 are reset (Step S9009), and the processing returns to Step S9001. Note that, although not illustrated, in a case that the radio channel enters the busy state during a period of carrier sense and the backoff procedure, the processing is attempted again from Step S9006, whereas in a case that a radio frame to be received is detected, the processing returns to Step S9001.

Next, as a modification, an example corresponding to the Multi-Link Operation (MLO) will be described, in which the access point apparatus 4001 and the station apparatus 4002 perform communication by simultaneously using two radio links, namely the first radio link and a second radio link using a frequency band (or a frequency channel) different from that of the first radio link. Note that the MLO is not limited to two radio links, and multiple radio links of different frequency bands (or frequency channels) can be used.

The Multi-Link Device (MLD) is a device capable of multi-link communication through the multi-link operation, and the access point apparatus supporting the MLO is referred to as an MLD access point apparatus, and the station apparatus supporting the MLO is referred to as an MLD station apparatus. The MLD access point apparatus and the MLD station apparatus are collectively also referred to as MLD radio communication apparatus(es). The present embodiment gives description on an assumption that the above-described radio communication apparatuses 4001-1, 4001-2, 4002A, and 4002B are the MLD radio communication apparatuses, but not necessarily all of the radio communication apparatuses in the radio communication system need to support the MLO in actual operation.

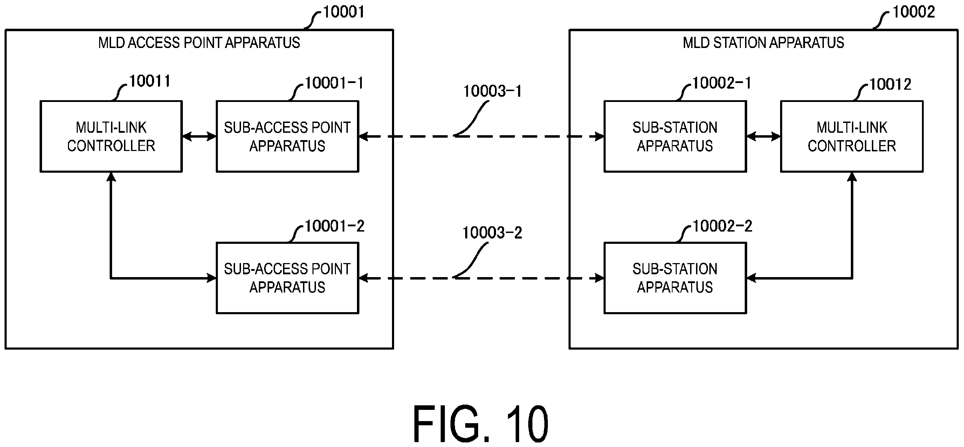

With reference to FIG. 10, an MLD access point apparatus 10001 and an MLD station apparatus 10002 will be described. The MLD radio communication apparatus includes multiple sub-radio communication apparatuses supporting frequency bands (or frequency channels) of respective radio links (also referred to as physical layer links) constituting the multi-link. Each sub-radio communication apparatus may support all of the frequency bands (and frequency channels) supported by the MLD radio communication apparatus, or each sub-radio communication apparatus may support one of the frequency bands (or frequency channels). Although FIG. 10 illustrates an example in which the MLD access point apparatus 10001 includes two sub-radio communication apparatuses, namely two sub-access point apparatuses 10001-1 and 10001-2 and a multi-link controller 10011 in this case, the number of sub-access point apparatuses is any number equal to or greater than 2. Note that, in the following, in a case that any one of multiple sub-access point apparatuses is described on behalf of the multiple sub-access point apparatuses, it is referred to as a sub-access point apparatus 10001-N. Similarly, although FIG. 10 illustrates an example in which the MLD station apparatus 10002 includes two sub-radio communication apparatuses, namely two sub-station apparatuses 10002-1 and 10002-2 and a multi-link controller 10012 in this case, the number of sub-station apparatuses is any number equal to or greater than 2. Note that, in the following, in a case that any one of multiple sub-station apparatuses is described on behalf of the multiple sub-station apparatuses, it is referred to as a sub-station apparatus 10002-N. The sub-radio communication apparatus (the sub-access point apparatus and the sub-station apparatus) may be configured with a part of a circuit in the radio communication apparatus, and may be referred to as a sub-radio communication unit (a sub-access point unit, a sub-station unit).

Although FIG. 10 illustrates an example in which multiple sub-radio communication apparatuses are configured as logically separate blocks, the multiple sub-radio communication apparatuses may be physically configured with one radio communication apparatus. Alternatively, the multiple sub-radio communication apparatuses may also be physically configured as separate apparatuses. The present embodiment will describe an example of a case that each of the sub-radio communication apparatuses is configured as a physically separate apparatus.

Note that the number of sub-access point apparatuses included in one MLD access point apparatus and the number of sub-station apparatuses included in one MLD station apparatus may vary depending on a grade, a class, a capability, and the like of each MLD radio communication apparatus. As the MLD radio communication apparatus has a higher grade, a higher class, and a higher capability, the number of sub-radio communication apparatuses (sub-access point apparatuses, sub-station apparatuses) to be equipped may be greater. In other words, regarding each MLD radio communication apparatus present in one radio communication system, the sub-radio communication apparatuses (sub-access point apparatuses, sub-station apparatuses) constituting each MLD radio communication apparatus may be different depending on a grade, a class, a capability, and the like, or those numbers need not match either.

The sub-station apparatus 10002-1 is associated with (Association) the sub-access point apparatus 10001-1, and establishes a radio link 10003-1 (first radio link). The sub-station apparatus 10002-2 is associated with the sub-access point apparatus 10001-2, and establishes a radio link 10003-2 (second radio link).

The configuration of the sub-access point apparatus 10001-N in FIG. 10 is similar to the configuration of the access point apparatus 4001 in FIG. 6, and a difference lies in that the multi-link controller 10011 and the radio controller 6001 of each sub-access point apparatus 10001-N are associated. The multi-link controller 10011 performs control of the radio link with respect to each sub-access point apparatus 10001-N, and gives and receives control information and transmission and/or reception data with each sub-access point apparatus 10001-N. The multi-link controller 10011 assigns transmission data frames to the sub-access point apparatuses 10001-1 and 10001-2, that is, each of the radio links 10003-1 and 10003-2, and aggregates reception data frames from each of the sub-access point apparatuses 10001-1 and 10001-2, that is, each of the radio links 10003-1 and 10003-2.

On the other hand, the configuration of the sub-station apparatus 10002-N in the FIG. 10 is similar to the configuration of the station apparatus 4002 in FIG. 5, and a difference lies in that the multi-link controller 10012 and the radio controller 5001 of each sub-station apparatus 10002-N are associated. The multi-link controller 10012 performs control of the radio link with respect to each sub-station apparatus 10002-N, and gives and receives control information and transmission and/or reception data with each sub-station apparatus 10002-N. The multi-link controller 10012 assigns transmission data frames to each of the sub-station apparatuses 10002-1 and 10002-2, that is, each of the radio links 10003-1 and 10003-2, and aggregates reception data frames from each of the sub-station apparatuses 10002-1 and 10002-2, that is, each of the radio links 10003-1 and 10003-2.

For the sake of simplicity of description, as an example, the following will describe a case that the radio links constituting the multi-link are two links, namely the radio link 10003-1 (first radio link) and the radio link 10003-2 (second radio link), but this is not restrictive, and application is similarly also possible to a case that the number of radio links is three or more. Although description will be given of an example of a case that the frequency band of the first radio link is the 2.4 GHz band and the frequency band of the second radio link is the 5 GHz band, the frequency band used by each radio link can be freely configured out of frequency bands (or frequency channels) supported by the radio communication system, such as the 2.4 GHz band, the 5 GHz band, the 6 GHz band, and the 60 GHz band, and those may vary according to legal regulations of each country.

An example of the sounding procedure according to the present modification will be described. An operation in each radio link is similar to the operation of a case that the number of radio links is one, which is illustrated in FIG. 7. In other words, on the first radio link, the sub-access point apparatus 10001-1 performs an operation similar to that of the access point apparatus 4001 of FIG. 7, and the sub-station apparatus 10002-1 performs an operation similar to that of the station apparatus 4002 of FIG. 7. On the second radio link, the sub-access point apparatus 10001-2 performs an operation similar to that of the access point apparatus 4001 of FIG. 7, and the sub-station apparatus 10002-2 performs an operation similar to that of the station apparatus 4002 of FIG. 7. Here, a timer included in the timer unit 5002 of the sub-station apparatus 10002-1 is referred to as the timer 5002-1 (first timer) as with FIG. 7, and a timer included in the timer unit 5002 of the sub-station apparatus 10002-2 is referred to as a timer 5002-3 (second timer). In the following, differences from the example of the sounding procedure in FIG. 7 will be mainly described, and description of similarities will be omitted.

The operation of the first radio link is similar to that of FIG. 7, and thus description thereof will be omitted. On the second radio link, in a case that the sub-station apparatus 10002-2 receives, from the sub-access point apparatus 10001-2, a radio frame 7001-2 (replacement of 7001 of FIG. 7; the same applies hereinafter) including second control information including configuration information related to the timer 5002-3, a sounding frame transmission condition from the sub-station apparatus 10002-2, and the like, the sub-station apparatus 10002-2 configures the timer count initial value and the like of the timer 5002-3 and then performs activation (7002-2). Note that the configuration information related to the timer 5002-3 may include a timer count initial value, a timer count expiration value, timer activation indication information, timer reset indication information, timer reset timing information, and the like. Through the activation 7002-2, the timer 5002-3 is reset to the timer count initial value, transitions from an inactive state 7101-2 to an active state 7102-2, and initiates the count-down operation. While being in the active state, the timer 5002-3 continues the count-down. Note that description is given of an example in which configuration, reset, activation, count-down start, and the like of the timer count initial value and the like of the timer 5002-3 are performed at one time based on reception of the radio frame 7001-2, but this is not restrictive, and for example, configuration and reset and activation and count-down start of the timer count initial value and the like may be performed with different radio frames (control information included therein) being a trigger.

An example has been described in which the timer 5002-3 is assumed to be a count-down timer, in which the value becomes the timer count initial value configured in advance due to reset and the state enters an expiration state at count 0, but this is not restrictive, and for example, the timer count expiration value may be separately configured to other than 0. Alternatively, the timer 5002-3 may be a count-up timer, which is initialized to count 0 due to reset, in which the state enters the expiration state in a case that the count reaches the timer count expiration value configured in advance.

In a case that the sub-station apparatus 10002-2 receives a radio frame (second radio frame) 7003-2 that requires a response and no error is detected in the radio frame 7003-2, the sub-station apparatus 10002-2 transmits a Ack frame 7004-2 as a response frame in response to the radio frame 7003-2 and subsequently transmits a sounding frame 7005-2 (the sounding frame transmitted on the second radio link is hereinafter also referred to as a second sounding frame), and resets the timer 5002-3 to the timer count initial value (7006-2). The reset timer 5002-3 continues to be in the active state (7103-2), and starts the count-down from the timer count initial value. Note that the timing of the reset (7006-2) of the timer 5002-3 is not limited to the time of transmission of the sounding frame 7005-2, and may be configured within a range in which the effects do not change, for example, between a timing of transmission of the Ack frame 7004-2 and a timing of transmission of the sounding frame 7005-2.

The radio frame that requires a response is not limited to the data frame, and may be a frame including the control information that requires a response. It is preferable that transmission of the Ack frame 7004-2 and transmission of the sounding frame 7005-2 be performed in an interval of the SIFS, but this is not restrictive, and another IFS used in a case of a high priority may be used. Furthermore, the Ack frame and the sounding frame may be concatenated to be transmitted. A frame obtained by concatenating the Ack frame and the sounding frame may be newly defined, and the frame may be transmitted.

At the time of reception of the radio frame 7003-2, only in a case that the count of the timer 5002-3 has reached a prescribed value (prescribed value or less), transmission of the sounding frame 7005-2 may be performed to reset the timer 5002-3. In this case, transmission of the sounding frame is prevented in a case that the timer 5002-3 has not reached the prescribed value, that is, elapsed time from previous sounding frame transmission is less than the prescribed time, and thus overhead due to sounding frame transmission can be reduced.

The radio frame 7003-2 may be a data frame for transmitting the A-MPDU in which multiple MPDUs are aggregated, and the Ack frame may be a BlockAck frame. In a case that the BlockAck frame is used, only in a case that the number or a ratio of the acknowledgment responses included in the BlockAck is less than the prescribed value, transmission of the sounding frame 7005-2 may be performed to reset the timer 5002-3. In this case, transmission of the sounding frame is prevented in a case that the timer 5002-3 has not entered the expiration state and the state of the radio link is satisfactory, and thus overhead due to sounding frame transmission can be reduced.

In a case that the count of the timer 5002-3 reaches 0 and the state enters the expiration state (7104-2), the sub-station apparatus 10002-2 enters a sounding frame transmission standby state (7007-2). In a case that the timer 5002-3 expires, the sub-station apparatus 10002-2 performs carrier sense and confirms that the radio channel is in the idle state, and then initiates the backoff procedure (7008-2). In a case that the radio channel is in the idle state during the backoff period, the sub-station apparatus 10002-2 transmits a sounding frame 7009-2 and resets the timer 5002-3 (7010-2). The timer 5002-3 is reset to the timer count initial value and transitions to the active state, and initiates the count-down operation (7105-2).

In a case that the sub-station apparatus 10002-2 receives a radio frame 7011-2 including control information (sixth control information) including information such as release of configuration related to the timer 5002-3, the sub-station apparatus 10002-2 deactivates the timer 5002-3 (7012-2). The deactivated timer 5002-3 stops the count-down operation, and transitions to an inactive state 7106. Note that, in a case that the sub-station apparatus 10002-1 receives the fourth control information on the first radio link, the sub-station apparatus 10002-2 may also deactivate the timer 5002-3. In a case that the sub-station apparatus 10002-2 receives the sixth control information on the second radio link, the sub-station apparatus 10002-1 may also deactivate the timer 5002-1.

As a modification, in a case that other control information (fifth control information) is received without directly receiving the second control information from the sub-access point apparatus 10001-2, information corresponding to the second control information may be generated in the sub-station apparatus 10002-2, based on the received control information. As an example, in a case that configuration information related to a QoS is received, the sub-station apparatus 10002-2 may configure the timer count initial value and the like of the timer 5002-3 and then perform activation (7002-2). The sub-station apparatus 10002-2 may change the timer count initial value and the like, depending on a requirement required as the QoS. In a case that allowable delay time is configured short, the timer count initial value may be reduced. In a case that bit rate guarantee is configured, the timer count initial value may be reduced. The sub-station apparatus 10002-2 may configure the timer count initial value and the like of the timer 5002-3, based on capability information exchanged with the sub-access point apparatus 10001-2. The configuration of the QoS may be configured by the sub-access point apparatus 10001-2 according to the current traffic state, or may be configured by an application performed on a network. The application performed on a network may acquire the configuration of the QoS via the sub-access point apparatus 10001-2.

As a modification, in a case that other control information is received without directly receiving the sixth control information from the sub-access point apparatus 10001-2, information corresponding to the sixth control information may be generated in the sub-station apparatus 10002-2, based on the received control information. As an example, in a case that configuration information related to a QoS is received, the sub-station apparatus 10002-2 may deactivate the timer 5002-3 (7012-2). In a case that the allowable delay time is configured long, the timer 5002-3 may be deactivated. In a case that best effort is configured for the configuration of the bit rate, the timer 5002-3 may be deactivated.

The sub-station apparatus 10002-2 associated with the sub-access point apparatus 10001-2 may include multiple timers for sounding control. The sub-station apparatus 10002-2 may include a second timer and a fourth timer similarly to the first timer and the third timer, and may be configured not to perform transmission of the sounding frame in a case that the fourth timer is not in the expiration state in transmission of the response frame. The sub-station apparatus 10002-2 may be configured to, in a case that the second timer expires, perform carrier sense and check that the radio channel of the second link is in the idle state, and then perform the backoff processing and transmit the sounding frame. After transmitting the sounding frame, the sub-station apparatus 10002-2 may reset the second timer and the fourth timer. Time until expiration of the fourth timer may be configured to be shorter than timer expiration time in the second timer.

In a case that the station apparatus receives control information for changing the configuration such as the timer count initial value in any of the active links in a case of being configured as the MLD, the station apparatus may perform activation and deactivation of the timer regarding the active links other than the link in which the control information is received. In a case that configuration information related to a QoS is received in any of the active links, activation and deactivation of the timer may be performed regarding the active links other than the link in which QoS information is received.

According to the method described in the above, communication quality of the radio links in radio communication can be satisfactorily maintained.

### 2. Matters Common for All Embodiments

Although the communication apparatuses according to the present invention can perform communication in a frequency band (frequency spectrum) that is a so-called unlicensed band that does not require permission to use from a country or a region, frequency bands usable are not limited thereto. The communication apparatus according to the present invention can exhibit its effect also in a frequency band called a white band, which is actually not used for the purpose of preventing frequency jamming and the like even though permission to use the frequency band is given from a country or a region for a specific service (for example, a frequency band allocated for television broadcasting but is not used depending on regions), or in a shared spectrum (shared frequency band) which is expected to be shared by multiple service providers, for example.

A program that operates in the radio communication apparatus according to the present invention is a program (a program for causing a computer to function) for controlling the CPU or the like to implement the functions of the aforementioned embodiments related to the present invention. In addition, information handled by these apparatuses is temporarily accumulated in a RAM at the time of processing, is then stored in various types of ROMs and HDDs, and is read by the CPU as necessary to be corrected and written. A semiconductor medium (e.g., a ROM, a non-volatile memory card, or the like), an optical recording medium (e.g., a DVD, an MO, an MD, a CD, a BD, or the like), a magnetic recording medium (e.g., a magnetic tape, a flexible disk, or the like), and the like can be examples of recording media for storing programs. In addition to implementing the functions of the aforementioned embodiments by performing loaded programs, the functions of the present invention may be implemented in processing performed in cooperation of an operating system, other application programs, and the like based on instructions of those programs.

In a case of delivering these programs to market, the programs can be stored and distributed in a portable recording medium, or transferred to a server computer connected via a network such as the Internet. In this case, the storage device serving as the server computer is also included in the present invention. A part or an entirety of the communication apparatuses in the aforementioned embodiments may be implemented as an LSI that is typically an integrated circuit. The functional blocks of the communication apparatuses may be individually implemented as chips or may be partially or completely integrated into a chip. In a case that the functional blocks are made as integrated circuits, an integrated circuit controller for controlling them is added. Note that it goes without saying that downloading of the programs and the configuration information from the server computer for implementation of at least a part of the functions of the aforementioned embodiments is also included in the present invention.

The circuit integration technique is not limited to LSI, and may be realized as dedicated circuits or a multi-purpose processor. Moreover, in a case that a circuit integration technology that substitutes an LSI appears with the advance of the semiconductor technology, it is also possible to use an integrated circuit based on the technology.

Note that, the invention of the present application is not limited to the above-described embodiments. The radio communication apparatus according to the invention of the present application is not limited to the application in the mobile station apparatus, and, needless to say, can be applied to a fixed-type electronic apparatus installed indoors or outdoors, or a stationary-type electronic apparatus, for example, an AV apparatus, a kitchen apparatus, a cleaning or washing machine, an air-conditioning apparatus, office equipment, a vending machine, and other household apparatuses.

Although the embodiments of the invention have been described in detail above with reference to the drawings, a specific configuration is not limited to the embodiments, and designs and the like that do not depart from the essential spirit of the invention also fall within the claims.

### Industrial Applicability

The present invention is preferably used for a radio communication apparatus and a radio communication method.

### Reference Signs List

3001 NDP Announcement frame
3002 NDP frame
3003 Compressed Beamforming/CQI frame
4001-1, 4001-2 Radio communication apparatus (access point apparatus)
4002-1 to 6 Radio communication apparatus (station apparatus)
4003-1, 4003-2 Radio communication system
5001 Radio controller
5002 Timer unit
5003 Radio communication unit
5003a Physical layer frame generation unit
5003b Radio transmitting unit
5003c Radio receiving unit
5003d Received power measuring unit
5003e Channel estimation unit
5003f Signal demodulation unit
5004 Antenna unit
6001 Radio controller
10001 MLD access point apparatus
10001-1 Sub-access point apparatus
10001-2 Sub-access point apparatus
10002 MLD station apparatus
10002-1 Sub-station apparatus
10002-2 Sub-station apparatus
10003-1 First radio link
10003-2 Second radio link
10011 Multi-link controller
10012 Multi-link controller

## Claims

1. A radio communication apparatus for performing communication with a radio communication apparatus of a communication partner using a radio link, the radio communication apparatus comprising:
a radio communication unit configured to perform transmission and reception of a radio frame on a first radio link; and
a radio controller including a first timer, wherein
in a case that the radio communication unit receives the radio frame including first control information indicating that the first timer is to be configured, the radio controller sets the first timer to an active state,
in a case that a first radio frame requiring a response is received on the first radio link, the radio communication unit transmits a first response frame in response to the first radio frame and subsequently transmits a first sounding frame without carrier sense, and the radio controller resets the first timer, and
in a case that the first timer expires, the radio communication unit performs carrier sense and then transmits the first sounding frame on the first radio link, and the radio controller resets the first timer.

2. The radio communication apparatus according to claim 1, wherein
the radio communication apparatus is a radio communication apparatus configured to perform communication with the radio communication apparatus of the communication partner by simultaneously using multiple radio links including the first radio link and a second radio link of a frequency band different from a frequency band of the first radio link,
the radio communication unit further performs transmission and reception of a radio frame on the second radio link,
the radio controller further includes a second timer,
in a case that the radio communication unit receives a radio frame including second control information indicating that the second timer is to be configured, the radio controller sets the second timer to the active state,
in a case that a second radio frame requiring a response is received on the second radio link, the radio communication unit transmits a second response frame in response to the second radio frame and subsequently transmits a second sounding frame without carrier sense, and the radio controller resets the second timer, and
in a case that the second timer expires, the radio communication unit performs carrier sense and then transmits the second sounding frame on the second radio link, and the radio controller resets the second timer.

3. The radio communication apparatus according to any of the preceding claims, wherein
in a case that the first timer has reached a prescribed value in the case that the first radio frame is received, the radio communication unit transmits, subsequently to transmission of the first response frame, the first sounding frame without carrier sense.

4. The radio communication apparatus according to any of the preceding claims, wherein
in a case that the first response frame is a block response frame,
the radio communication unit transmits, subsequently to transmission of the block response frame, the first sounding frame without carrier sense, in a case that the number of acknowledgment responses included in the block response frame is less than a prescribed number.

5. The radio communication apparatus according to any of the preceding claims, wherein
in a case that the radio communication unit receives the radio frame including third control information, the radio controller configures an expiration criterion for the first timer and resets the first timer.

6. The radio communication apparatus according to claim 5, wherein
the third control information is information for configuring a Quality of Service (QoS).

7. The radio communication apparatus according to any of the preceding claims, wherein
in a case that the radio communication unit receives the radio frame including fourth control information, the radio controller sets the first timer to an inactive state.

8. The radio communication apparatus according to claim 7, wherein
the fourth control information is information for releasing configuration of the QoS.

9. The radio communication apparatus according to any of the preceding claims, wherein
the radio controller further includes a third timer, and sets the first timer and the third timer to the active state, in the case that the radio communication unit receives the radio frame including the first control information,
in a case that the third timer has expired in the case that the first radio frame is received, the radio communication unit transmits, subsequently to transmission of the first response frame, the first sounding frame without carrier sense and the radio controller resets the first timer and the third timer, and
in the case that the first timer expires, the radio communication unit performs carrier sense and then transmits the first sounding frame on the first radio link, and the radio controller resets the first timer and the third timer.

10. The radio communication apparatus according to claim 2, wherein
in a case that the first timer has reached a prescribed value in the case that the first radio frame is received, the radio communication unit transmits, subsequently to transmission of the first response frame, the first sounding frame without carrier sense, and
in a case that the second timer has reached a prescribed value in the case that the second radio frame is received, the radio communication unit transmits the second response frame and subsequently transmits the second sounding frame without carrier sense.

11. The radio communication apparatus according to claim 2, wherein
in a case that the first response frame or the second response frame is a block response frame,
the radio communication unit transmits the block response frame and subsequently transmits the first sounding frame or the second sounding frame without carrier sense, in a case that the number of acknowledgment responses included in the block response frame is less than a prescribed number.

12. The radio communication apparatus according to claim 2, wherein
the radio controller
configures an expiration criterion for the first timer and resets the first timer in a case that the radio communication unit receives a radio frame including third control information, and
configures an expiration criterion for the second timer and resets the second timer in a case that the radio communication unit receives a radio frame including fifth control information.

13. The radio communication apparatus according to claim 2, wherein
the radio controller
sets the first timer to an inactive state in a case that the radio communication unit receives a radio frame including fourth control information, and
sets the second timer to the inactive state in a case that the radio communication unit receives a radio frame including sixth control information.

14. A radio communication apparatus for performing communication with a radio communication apparatus of a communication partner using a radio link, the radio communication apparatus comprising:
a radio communication unit configured to perform transmission and reception of a radio frame on a first radio link; and
a radio controller configured to generate control information, wherein
the radio controller generates first control information including a configuration and reset criterion related to a first timer included in the radio communication apparatus of the communication partner and a transmission criterion for a sounding frame from the radio communication apparatus of the communication partner, and
the first radio communication unit transmits a radio frame including the first control information.

15. A radio communication method in a radio communication apparatus for performing communication with another radio communication apparatus using a radio link, the radio communication method comprising the steps of:
receiving a radio frame including first control information indicating that a first timer is to be configured;
in a case that the radio frame including the first control information is received, setting the first timer to an active state;
receiving a first radio frame requiring a response on a first radio link;
transmitting a first response frame in response to the first radio frame;
transmitting, subsequently to transmission of the first response frame, a first sounding frame without carrier sense and resetting the first timer; and
in a case that the first timer expires, performing carrier sense and then transmitting the first sounding frame on the first radio link, and resetting the first timer.
